# DEMANDE DE BREVET EUROPEEN

(11) **EP 2 031 798 A1**
(43) Date de publication de la demande: **04.03.2009**
(21) Numéro de dépôt: 08163450.3
(22) Date de dépôt: 02.09.2008
(51) Int. Cl.: H04L 12/18, H04L 12/56

(54) **Prodédé d'établissement d'une connexion bidirectionnelle point à mulipoint**

(30) Priorité: 03.09.2007 FR 0757329
(71) Demandeur: Alcatel Lucent, 75008 Paris (FR)
(72) Inventeur: Brehon, Yannick, 75014, PARIS (FR); Ciavaglia, Laurent, 92120, MONTROUGE (FR)
(74) Mandataire: Thibaud, Jean-Baptiste

(57) **Abrégé**

Un dispositif de communication (S) pour un réseau MPLS, comprend un module de signalisation apte à établir un arbre de connexion MPLS point-à-multipoint avec une pluralité de noeuds-feuilles (A, B) en transmettant un message de demande de connexion et en recevant un message de réservation en réponse, ledit message de demande de connexion comprenant des adresses desdits noeuds-feuilles et des caractéristiques de trafic descendant pour caractériser la qualité de service désirée pour un flux de données descendant à transmettre auxdits noeuds-feuilles, ledit message de réservation comprenant une étiquette pour établir une connexion MPLS descendante. Pour établir l'arbre de connexion MPLS (15, 16, 17) de manière bidirectionnelle, le message de demande de connexion comprend en outre des caractéristiques de trafic montant pour caractériser la qualité de service désirée pour des flux de données montants à recevoir depuis lesdits noeuds-feuilles et une étiquette pour établir une connexion MPLS montante.

## Description

L'invention se rapporte au domaine des réseaux à commutation de paquets.

Les techniques de commutation d'étiquettes connues sous le nom de MPLS (Multi Protocol Label Switching) et leurs développements connus sous le nom de GMPLS et TMPLS permettent de créer des connexions logiques dans des réseaux à commutation de paquets pour contrôler la qualité de service. Par mesure de simplicité, on utilisera MPLS pour désigner l'ensemble de ces techniques dans cette description. Une connexion MPLS est couramment dénommée LSP (Label Switched Path).

La RFC 4875 publiée par l'IETF décrit des extensions du protocole RSVP-TE (Resource Reservation Protocol - Traffic Engineering) pour établir des arbres de connexion MPLS point-à-multipoint. Cette technique s'appuie sur RSVP-TE sans nécessiter de protocole de routage multipoint. De tels arbres de connexion peuvent être utilisés pour distribuer des services de multidiffusion comme la télévision sur IP ou autres. Cependant, la plupart des applications requièrent un canal montant depuis les récepteurs du service vers la source pour contrôler l'application. Une manière de réaliser ce canal montant serait d'établir séparément des connexions MPLS point à point entre chaque récepteur et la source. Dans ce cas, le plan de contrôle doit gérer plusieurs sessions de signalisation pour établir et maintenir ces connexions. De plus, l'état de disponibilité des ressources au niveau d'un noeud est susceptible de changer entre ces différentes procédures d'établissement séparées, ce qui présente des inconvénients comme le risque de découvrir que les ressources d'un noeud sont insuffisantes seulement à un stade tardif des procédures d'établissement.

Un but de l'invention est de permettre l'établissement d'un arbre de connexion MPLS qui présente une connectivité bidirectionnelle, notamment une connectivité asymétrique. Un autre but de l'invention est de réaliser cet établissement par une méthode simple et fiable.

Pour cela, l'invention fournit un dispositif de communication pour un réseau MPLS, comprenant :
un module de signalisation pour établir des connexions MPLS dans ledit réseau et un module de gestion des ressources pour allouer des ressources de transfert auxdites connexions, ledit module de signalisation étant apte à établir un arbre de connexion MPLS point-à-multipoint avec une pluralité de noeuds-feuilles dudit réseau en transmettant un message de demande de connexion à destination desdits noeuds-feuilles et en recevant un message de réservation en réponse audit message de demande de connexion, ledit message de demande de connexion comprenant des adresses desdits noeuds-feuilles et des caractéristiques de trafic descendant pour caractériser la qualité de service désirée pour un flux de données descendant à transmettre auxdits noeuds-feuilles, ledit message de réservation comprenant une étiquette pour établir une connexion MPLS descendante,
   caractérisé par le fait que, pour établir ledit arbre de connexion MPLS de manière bidirectionnelle, ledit message de demande de connexion comprend en outre des caractéristiques de trafic montant pour caractériser la qualité de service désirée pour des flux de données montants à recevoir depuis lesdits noeuds-feuilles et une étiquette pour établir une connexion MPLS montante.

Un tel dispositif de communication convient par exemple pour réaliser un noeud source de l'arbre de connexion MPLS. Selon des modes de réalisation particuliers, ce dispositif de communication présente une ou plusieurs des caractéristiques suivantes :
- les caractéristiques de trafic montant comprennent au moins une caractéristique de trafic commune associée à tous les noeuds-feuilles désignés dans le message de demande de connexion.
- les caractéristiques de trafic montant comprennent plusieurs caractéristiques de trafic distinctes associées respectivement à plusieurs noeuds-feuilles distincts désignés dans le message de demande de connexion.
- le module de gestion des ressources est apte à appliquer une règle de fusion des connexions montantes pour déterminer une quantité de ressources de transfert allouée à la connexion MPLS montante en fonction des caractéristiques de trafic montant associées auxdits noeuds-feuilles.
- le module de signalisation est apte à insérer dans ledit message de demande de connexion un indicateur de style de réservation indiquant la règle de fusion appliquée par ledit module de gestion des ressources.
- le module de gestion des ressources est apte à appliquer sélectivement plusieurs règles de fusion des flux montants.
- la règle de fusion des connexions montantes peut notamment être une règle d'exclusion mutuelle des flux montants ou une règle de cumul des flux montants.

Ici, une règle d'exclusion mutuelle des flux désigne une règle de calcul des ressources fondée sur l'hypothèse que les flux montants de deux noeuds-feuilles distincts ne sont jamais émis simultanément dans le réseau. Il suffit donc d'allouer à la connexion montante les ressources de transfert en quantité suffisante pour transférer le flux montant d'un des noeuds-feuilles, c'est-à-dire pour satisfaire les critères de qualité de service du flux montant le plus exigeant parmi ceux qui sont susceptibles d'être reçus par le dispositif de communication. Au contraire, une règle de cumul des flux désigne une règle de calcul des ressources fondée sur l'hypothèse que les flux montants de plusieurs noeuds-feuilles distincts sont transmis simultanément dans le réseau. Cette hypothèse implique donc d'allouer les ressources de transfert en quantité suffisante pour transférer les flux montants susceptibles d'être reçus par le dispositif de communication depuis tous les noeuds-feuilles en même temps. D'autres possibilités existent pour les règles de fusion des flux montants, par exemple des règles de cumul partiel fondées sur des hypothèses de multiplexage statistique des flux montants de différents noeuds-feuilles.

L'invention fournit également un procédé pour établir un arbre de connexion point-à-multipoint bidirectionnel entre un noeud source et des noeuds-feuilles dans un réseau MPLS, ledit procédé comprenant les étapes consistant à :
recevoir au niveau d'un noeud de commutation un message de demande de connexion comportant des adresses de destination identifiant des noeuds-feuilles, des caractéristiques de trafic descendant pour caractériser la qualité de service désirée pour un flux de données descendant à transmettre auxdits noeuds-feuilles, des caractéristiques de trafic montant pour caractériser la qualité de service désirée pour des flux de données montants à recevoir depuis lesdits noeuds-feuilles et une étiquette pour établir une connexion MPLS montante vers le noeud source,
déterminer une quantité de ressources de transfert allouée à ladite connexion MPLS montante en fonction desdites caractéristiques de trafic montant et d'une règle de fusion des connexions montantes,
déterminer des interfaces aval dudit noeud de commutation pour communiquer avec lesdits noeuds-feuilles,
sur chacune desdites interface aval, transmettre un message de demande de connexion comportant au moins une adresse de destination identifiant au moins un noeud-feuille accessible à travers ladite interface aval, lesdites caractéristiques de trafic descendant, les caractéristiques de trafic montant pour caractériser la qualité de service désirée pour les flux de données montants à recevoir depuis ledit au moins un noeud-feuille et une étiquette pour établir une connexion MPLS montante vers ledit noeud de commutation,
sur lesdites interfaces aval, recevoir des messages de réservation comportant des étiquettes pour établir des connexions MPLS descendantes vers lesdits noeuds-feuilles, transmettre vers ledit noeud source un message de réservation comportant une étiquette pour établir une connexion MPLS descendante vers ledit noeud de commutation,
créer une association entre les étiquettes des connexions MPLS descendantes et une association entre les étiquettes des connexions MPLS montantes dans une table de commutation dudit noeud de commutation.

Un tel procédé d'établissement peut par exemple être mis en oeuvre au niveau d'un ou plusieurs noeuds d'embranchement de l'arbre de connexion. Selon des modes de réalisation particuliers, ce procédé d'établissement présente une ou plusieurs des caractéristiques suivantes :
- il comporte l'étape consistant à sélectionner ladite règle de fusion des connexions montantes en fonction d'un indicateur de style de réservation contenu dans ledit message de demande de connexion reçu.
- il comporte l'étape consistant à retransmettre ledit indicateur de style de réservation dans les messages de demande de connexion sur lesdites interfaces aval.
- la règle de fusion des connexions montantes est sélectionnée dans un ensemble comprenant une règle d'exclusion mutuelle des flux montants et une règle de cumul des flux montants.
- les messages de réservation reçus par le noeud de commutation comportent des caractéristiques de trafic montant, par exemple dans des objets U_FLOWSPEC, pour caractériser la qualité de service désirée pour les flux de données montants à recevoir depuis lesdits noeuds-feuilles et le message de réservation transmis par le noeud de commutation comporte des caractéristiques de trafic montant, par exemple dans un objet U_FLOWSPEC, résultant de l'application de ladite règle de fusion.

L'invention fournit également un noeud de commutation pour un réseau MPLS, comprenant un module de signalisation pour établir des connexions MPLS dans ledit réseau et un module de gestion des ressources pour allouer des ressources de transfert auxdites connexions,
ledit module de signalisation étant apte à établir un arbre de connexion MPLS point-à-multipoint avec une pluralité de noeuds-feuilles en effectuant les étapes consistant à:
recevoir depuis un noeud amont un message de demande de connexion comportant des adresses de destination identifiant des noeuds-feuilles et des caractéristiques de trafic descendant pour caractériser la qualité de service désirée pour un flux de données descendant à transmettre auxdits noeuds-feuilles,
transmettre à destination desdits noeuds-feuilles des messages de demande de connexion comportant lesdites adresses de destination et lesdites caractéristiques de trafic descendant,
en réponse auxdits messages de demande de connexion, recevoir des messages de réservation comportant des étiquettes pour établir des connexions MPLS descendantes vers lesdits noeuds-feuilles,
transmettre vers ledit noeud amont un message de réservation comportant une étiquette pour établir une connexion MPLS descendante vers ledit noeud de commutation,
et créer une association entre les étiquettes des connexions MPLS descendantes dans une table de commutation dudit noeud de commutation,
caractérisé par le fait que, pour établir ledit arbre de connexion MPLS de manière bidirectionnelle, ledit module de signalisation est apte à établir une connexion MPLS montante avec ledit noeud amont à l'aide d'une étiquette reçue dans ledit message de demande de connexion,
et que ledit module de gestion des ressources est apte à déterminer une quantité de ressources de transfert allouée à ladite connexion MPLS montante en fonction d'une règle de fusion des connexions montantes et de caractéristiques de trafic montant reçues dans ledit message de demande de connexion,
ledit module de signalisation étant apte à transmettre dans lesdits messages de demande de connexion lesdites caractéristiques de trafic montant et des étiquettes pour établir des connexions MPLS montantes vers ledit noeud de commutation, et à créer une association entre les étiquettes des connexions MPLS montantes dans ladite table de commutation.

Un tel noeud de communication convient par exemple pour réaliser un noeud d'embranchement de l'arbre de connexion MPLS. Selon des modes de réalisation particuliers, ce noeud de communication présente une ou plusieurs des caractéristiques suivantes :
- le module de gestion des ressources est apte à sélectionner ladite règle de fusion des connexions montantes en fonction d'un indicateur de style de réservation contenu dans ledit message de demande de connexion reçu.
- le module de signalisation est apte à retransmettre ledit indicateur de style de réservation dans lesdits messages de demande de connexion.
- la règle de fusion des connexions montantes est sélectionnée dans un ensemble comprenant une règle d'exclusion mutuelle des flux montants et une règle de cumul des flux montants.
- le module de gestion des ressources est apte à allouer à une connexion MPLS montante provenant d'au moins un noeud-feuille une quantité de ressources de transfert correspondant aux caractéristiques de trafic montant associées audit au moins un noeud-feuille dans ledit message de demande de connexion reçu par le noeud de commutation.
- le module de signalisation est apte à transmettre au noeud amont un message de réservation comportant des caractéristiques de trafic montant résultant de l'application de ladite règle de fusion.

Une idée à la base de l'invention est d'établir, dans une seule session de signalisation, un arbre de connexion MPLS point-à-multipoint et un arbre de connexion MPLS multipoint-à-point utilisant les mêmes routes dans le sens inverse, de manière à offrir une connectivité bidirectionnelle entre un noeud source et des noeuds-feuilles, notamment avec des caractéristiques de trafic asymétriques, et à pouvoir gérer facilement ces connexions MPLS comme une seule entité logique du plan de contrôle. Une autre idée à la base de l'invention est d'établir ces connexions MPLS au moyen d'un seul échange de messages de signalisation entre le noeud source et les noeuds-feuilles, de manière à pouvoir effectuer sensiblement simultanément le contrôle d'admission pour les connexions montantes et descendantes.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 représente schématiquement un mode de réalisation d'un réseau MPLS dans lequel l'invention peut être mise en oeuvre.
La figure 2 représente schématiquement un mode de réalisation d'un arbre de connexion point-à-multipoint bidirectionnel établi dans le réseau de la figure 1.
La figure 3 représente schématiquement une table de commutation d'un noeud d'embranchement de l'arbre de connexion de la figure 2.
La figure 4 représente schématiquement un mode de réalisation d'un procédé de signalisation pour établir l'arbre de connexion de la figure 2.
La figure 5 est une représentation synthétique d'un message de demande de connexion utilisé dans le procédé de la figure 3.
La figure 6 est un exemple de descripteur de trafic utilisé dans le message de la figure 5.
La figure 7 est une représentation synthétique d'un message de réservation utilisé dans le procédé de la figure 3.
La figure 8 est un exemple de descripteur de trafic utilisé dans le message de la figure 7.
La figure 9 est un tableau illustrant plusieurs modes de réalisation d'une réservation de ressources pour une connexion montante dans l'arbre de connexion de la figure 2.
La figure 10 représente schématiquement un mode de réalisation d'un routeur MPLS utilisable dans le réseau de la figure 1.

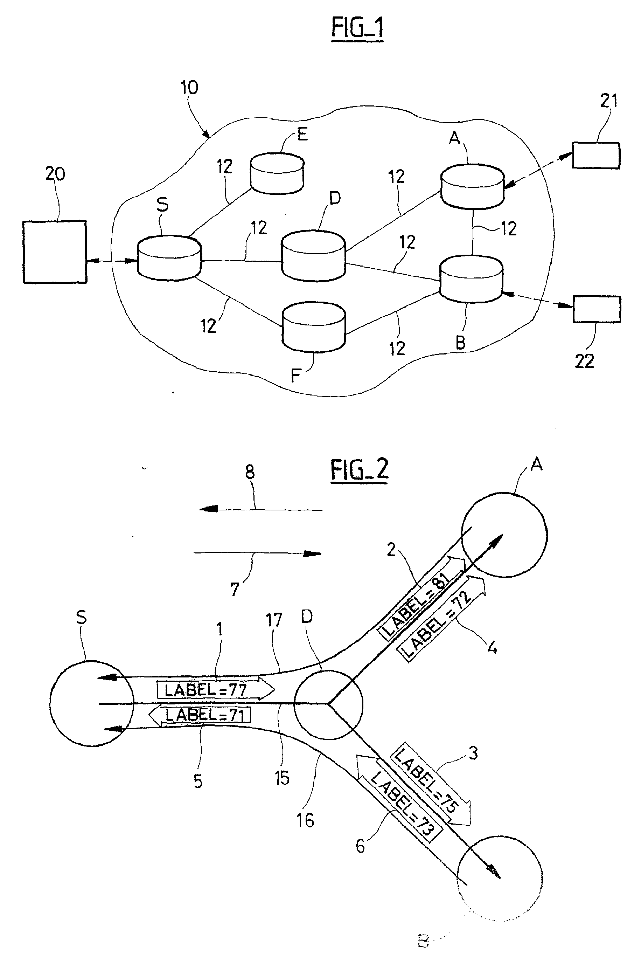

Sur la figure 1, on a représenté schématiquement six noeuds A, B, D, E, F et S d'un réseau 10 à plan de contrôle IP/MPLS. Par exemple, les noeuds A, B, D, E, F et S sont des routeurs IP/MPLS. La référence 12 désigne des liens physiques entre ces noeuds. La nature des liens 12 et des interfaces physiques entre les noeuds peut être quelconque. La topologie et l'étendue du réseau peuvent être quelconques, en particulier le nombre de noeuds peut être plus élevé que sur la figure 1.

On va décrire, à titre d'exemple, l'établissement d'un arbre de connexion point-à-multipoint bidirectionnel entre les noeuds S, A et B. Cet établissement peut être demandé par exemple par un serveur d'application 20 relié au noeud S qui a besoin à la fois de diffuser un flux de données à des applications clientes 21 et 22 reliées aux noeuds A et B, et de pouvoir recevoir des flux de données depuis les applications clientes 21 et 22. Cet établissement peut aussi être demandé par un système de gestion de réseau. On suppose qu'un calcul de route donne pour résultat la route S-D-A pour relier l'application 20 au client 21 et la route S-D-B pour relier l'application 20 au client 22. Ce calcul de route est effectué préalablement à la phase de signalisation et/ou au cours de la phase de signalisation, par des procédés de routage qui ne seront pas décrits ici. Dans le premier cas, les messages de demandes de connexion sont routés explicitement. Dans le second cas, les messages de demandes de connexion sont routés saut par saut.

On rappelle qu'une connexion MPLS comporte une séquence d'une ou plusieurs connexions élémentaires identifiées à chaque fois par une étiquette ou label ayant une valeur locale convenue entre deux noeuds adjacents. Un noeud de commutation reconnaît qu'un paquet appartient à une connexion au moyen de l'étiquette correspondante placée dans une entête du paquet. Les noeuds ont des tables de commutation permettant de trouver, pour chaque étiquette entrante, l'interface de sortie et l'étiquette à placer dans l'entête du paquet, de sorte que les paquets peuvent être routés sans lecture des entêtes IP.

La figure 2 représente schématiquement l'arbre de connexion point-à-multipoint bidirectionnel établi entre les noeuds S, A et B. On appellera direction descendante ou vers l'aval la direction indiquée par la flèche 7 allant du noeud S vers les noeuds A et B, et direction montante ou vers l'amont la direction indiquée par la flèche 8 allant du noeud A ou B vers le noeud S. Selon les conventions habituelles du protocole RSVP, l'amont correspond au noeud émetteur d'un message de demande de connexion et l'aval correspond au destinataire de ce message, qui est aussi l'émetteur d'un message de réservation. L'arbre de connexion point-à-multipoint bidirectionnel comporte une connexion point-à-multipoint descendante 15 entre le noeud S, qui est le noeud source, et les noeuds A et B, qui sont les noeuds-feuilles, ainsi qu'une connexion multipoint-à-point montante entre les noeuds-feuilles A et B et le noeud source S. La connexion point-à-multipoint descendante 15 comporte la connexion élémentaire 1 entre S et D, la connexion élémentaire 2 entre D et A et la connexion élémentaire 3 entre D et B. Le noeud D est un noeud d'embranchement de la connexion point-à-multipoint. Il assure la réplication des paquets entrant par la connexion élémentaire 1 vers les connexions élémentaires 2 et 3. La connexion multipoint-à-point montante se présente comme une pluralité de connexions point-à-point qui sont fusionnées sur leur portion commune. La connexion point-à-point montante 17 entre le noeud-feuille A et le noeud source S comporte la connexion élémentaire 4 entre A et D et la connexion élémentaire 5 entre D et S. La connexion point-à-point montante 16 entre le noeud-feuille B et le noeud source S comporte la connexion élémentaire 6 entre B et D et la connexion élémentaire 5 entre D et S. Ainsi, en amont du noeud d'embranchement D, les connexions 16 et 17 sont fusionnées, de sorte que des ressources sont réservées conjointement pour les flux montants des différents noeuds-feuilles A et B. La topologie représentée a été choisie très simple par mesure de clarté. Bien entendu, d'autres structures d'arbres de connexion peuvent être réalisées de manière analogue, notamment avec plusieurs noeuds d'embranchement.

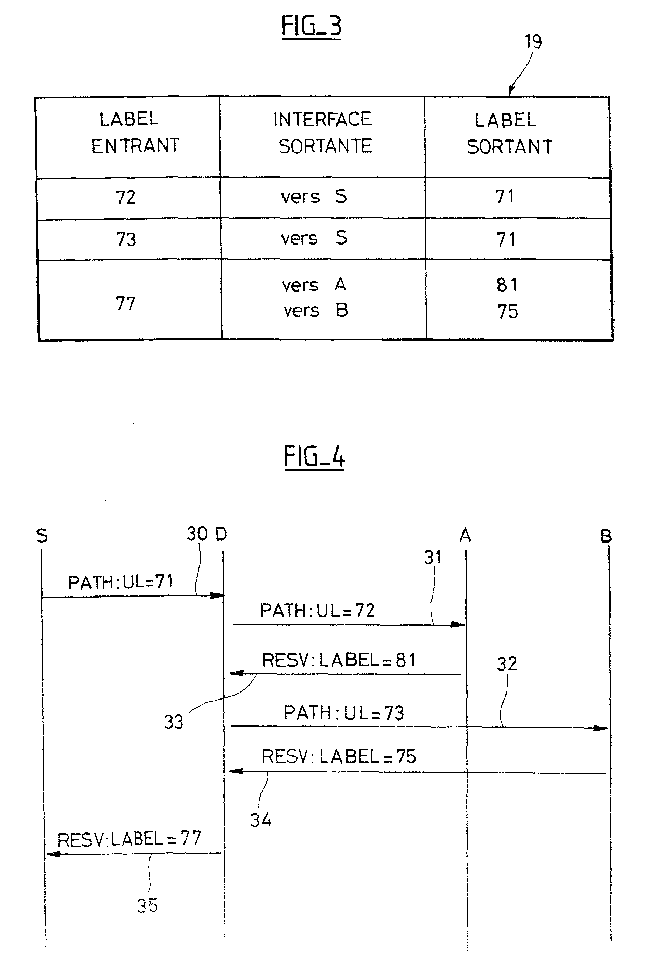

Sur la figure 2, on a indiqué à titre illustratif les valeurs des labels identifiant chaque connexion élémentaire. La figure 3 représente le contenu d'une table de commutation correspondante 19 utilisée au niveau du noeud d'embranchement D. On a représenté une seule table de commutation pour le noeud par mesure de simplicité, mais il existe plusieurs manière d'organiser les données de commutation d'un noeud, dans une ou plusieurs structures de données. Par exemple, il peut être prévu une table de commutation par interface entrante du noeud.

Selon un mode de réalisation, l'arbre de connexion bidirectionnel de la figure 2 est établi à l'aide du protocole de signalisation RSVP-TE. La figure 4 représente les transferts de messages de signalisation qui permettent cet établissement. Ces messages comportent des messages de demande de connexion, dénommés PATH dans RSVP-TE, et des messages de réservation, dénommés RESV dans RSVP-TE. Selon les règles de fonctionnement normales du protocole RSVP-TE, chaque noeud sélectionne les étiquettes identifiant les connexions entrantes dans le noeud et se fait communiquer par les noeuds voisins les étiquettes identifiant les connexions sortantes du noeud. Par rapport à la technique connue pour établir une connexion point-à-multipoint descendante avec RSVP-TE, le même nombre de messages de signalisation est échangé. Le contenu de ces messages est ici modifié pour permettre simultanément l'établissement des connexions montantes depuis les noeuds-feuilles ver le noeud source. Tous ces messages de signalisation sont échangés dans une même session RSVP-TE et comportent donc des identifiants de session communs, ce qui permet de créer une association logique entre les connexions 15, 16 et 17 constitutives de l'arbre de connexion bidirectionnel. De ce fait, le plan de contrôle du réseau peut effectivement gérer l'arbre de connexion bidirectionnel comme une seule entité, ce qui facilite des opérations comme la détection des fautes, le re-routage, la restauration ou le redimensionnement des réservations.

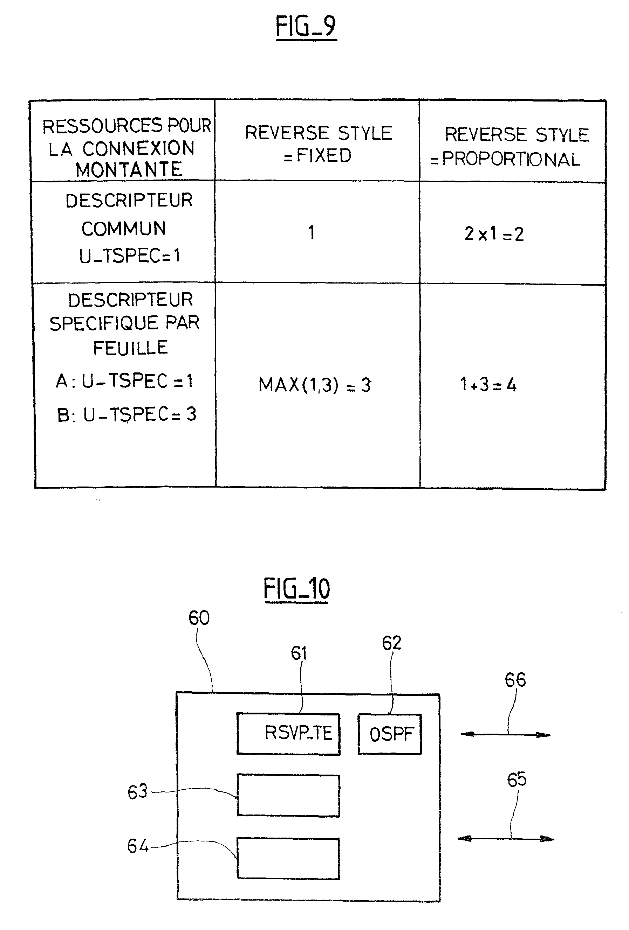

La figure 10 représente un exemple d'architecture fonctionnelle de commutateur MPLS ou GMPLS pour réaliser les noeuds A, B, D et S. Le commutateur 60 comporte un contrôleur de signalisation 61 et un contrôleur de routage 62 communiquant avec les autres éléments de réseau par des canaux de contrôle 66. Le contrôleur de signalisation 61 reçoit et transmet des messages de signalisation pour établir des connexions avec les autres éléments de réseau. Une unité de transfert de trafic 64 communique avec les autres éléments de réseau par des canaux de données 65. L'unité de transfert de trafic 64 est en charge de transférer les paquets de données en fonction des labels. Les canaux de données 65 et de contrôle 66 peuvent être réalisés sur des interfaces communes ou distinctes. Un contrôleur de gestion des ressources 63 réserve et alloue des ressources de transfert aux connexions en fonction de leur disponibilité. Il remplit notamment des fonctions de contrôle d'admission et de contrôle de politique.

On décrit maintenant plus précisément l'échange des messages PATH et RESV. Les caractéristiques de qualité de service des connexions à établir dans le sens descendant et dans le sens montant sont préalablement communiquées au noeud source S. Ces caractéristiques sont traitées de manière indépendante dans les deux sens et peuvent donc être identiques pour établir des connexions symétriques ou différentes pour établir des connexions asymétriques. Ces caractéristiques peuvent être par exemple spécifiées par le serveur d'application 20 ou par le système de gestion de réseau qui demande la connexion. A partir de ces caractéristiques, le noeud source S forme un objet SENDER_TSPEC qui est un descripteur de trafic pour le flux descendant et un ou plusieurs objets U_TSPEC qui sont des descripteurs de trafic pour les flux montants. Ces descripteurs de trafic constituent une caractérisation, à un niveau plus ou moins détaillé, de la qualité de service requise pour l'arbre de connexion. Le noeud source S transmet un message PATH 30, comportant entre autres ces objets, au prochain saut qui est ici le noeud D.

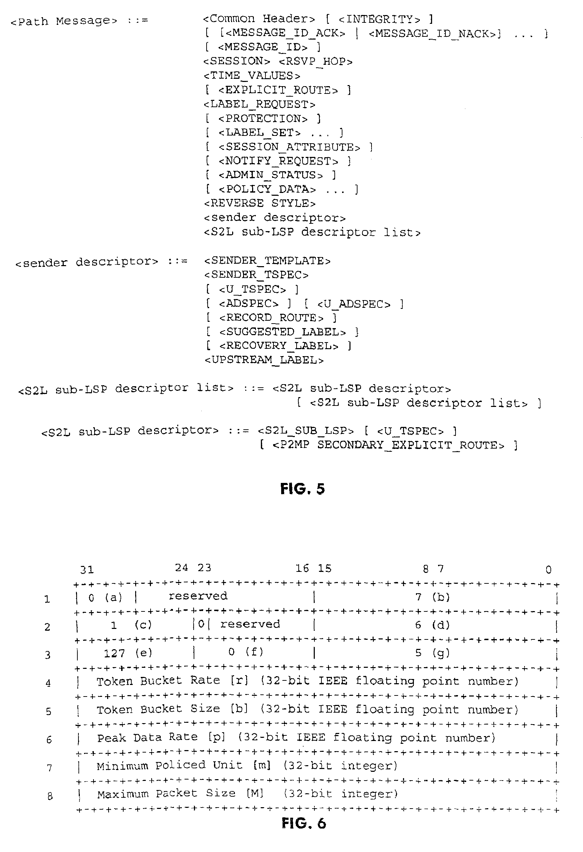

La figure 5 donne un exemple de format utilisable pour le message PATH. Les crochets désignent des objets optionnels. Hormis les objets REVERSE_STYLE, U_TSPEC, U_ADSPEC, et UPSTREAM_LABEL, ce format correspond à la RFC 4875. En particulier, les adresses des noeuds-feuilles sont indiquées dans les objets S2L_SUB_LSP. Les objets ADSPEC et U_ADSPEC sont des descripteurs de chemin de connexion qui sont établis et mis à jour par les noeuds traitant le message PATH afin de spécifier des caractéristiques des éléments constitutifs du chemin de connexion, comme expliqué dans la RFC 2210. Ici, l'objet ADSPEC est dédié aux caractéristiques des chemins de connexion dans le sens descendant et l'objet U_ADSPEC est dédié aux caractéristiques des chemins de connexion dans le sens montant. L'objet UPSTREAM_LABEL sert à indiquer au prochain saut le label devant être utilisé pour la connexion montante.

La figure 3 donne un exemple de format utilisable pour les objets SENDER_TSPEC et U_TSPEC. Ce format correspond à un réseau de type paquet où la qualité de service est contrôlée dans le cadre défini par la RFC 2210. Le contenu des descripteurs de trafic dépend de la nature des couches basses du réseau. D'autres paramètres de trafic peuvent être utilisés selon les possibilités offertes par le réseau. Par exemple, la RFC 4606 définit des paramètres de trafic pour une couche physique SONET/SDH. La proposition « MEF Ethernet Traffic Parameters » soumise par Papadimitriou à l'IETF en juin 2007 définit des paramètres de trafic pour un réseau Ethernet.

Etant donné que la connexion descendante concerne des flux de données diffusés par le noeud source S à tous les noeuds-feuilles, un seul descripteur de trafic SENDER_TSPEC suffit à caractériser la qualité de service requise sur toutes les connexions élémentaires dans le sens descendant. En revanche, plusieurs possibilités existent pour caractériser la qualité de service dans le sens montant.

Une première possibilité part de l'hypothèse que tous les noeuds-feuilles ont les mêmes besoins de qualité de service dans le sens montant. Dans ce cas, un seul descripteur de trafic U_TSPEC est suffisant dans les messages PATH. Cet objet est alors commun à tous les noeuds-feuilles. Il peut être placé directement dans l'objet sender descriptor, comme indiqué sur la figure 5.

Une deuxième possibilité part de l'hypothèse que chaque noeud-feuille a des besoins de qualité de service spécifiques dans le sens montant. Dans ce cas, le message PATH doit contenir un descripteur de trafic U_TSPEC pour chaque noeud-feuille auquel il est destiné. Ces objets peuvent être placés dans les objets S2L sub-LSP descriptor, comme indiqué sur la figure 5. Dans les deux cas, un descripteur de trafic U_TSPEC caractérise une seule connexion montante.

Lorsque le contrôleur de signalisation du noeud d'embranchement D reçoit le message PATH, il traite son contenu selon la technique connue pour ce qui concerne la connexion descendante. En particulier, le descripteur de trafic SENDER_TSPEC est traité par le contrôleur de gestion des ressources pour pré-réserver des ressources de transfert dans la direction descendante. Si les ressources nécessaires ne sont pas disponibles, un message d'erreur est émis.

Par ailleurs, le noeud d'embranchement D est aussi un noeud de fusion pour ce qui concerne les connexions montantes. En effet, la connexion montante du noeud A et la connexion montante du noeud B sont fusionnées à partir du noeud D. Le noeud D n'établit qu'une seule connexion montante 5 vers le noeud source, à l'aide de l'étiquette qu'il reçoit dans l'objet UPSTREAM_LABEL. Pour déterminer les caractéristiques de qualité de service, et donc les ressources qui doivent être allouées à la connexion montante 5, le contrôleur de gestion des ressources traite le ou les objets U_TSPEC en appliquant une règle de fusion des connexions montantes. Cette règle définit la manière dont les descripteurs de trafic U_TSPEC associés à chaque noeud-feuille doivent être fusionnés. Cette règle peut être fixée par configuration. Dans un mode de réalisation préféré, cette règle est sélectionnée par le noeud d'embranchement D en fonction du contenu de l'objet REVERSE_STYLE. Selon la valeur de cet objet, le contrôleur de gestion des ressources sélectionne une règle de fusion ou une autre.

Dans un mode de réalisation préféré, l'objet REVERSE_STYLE peut prendre deux valeurs, une valeur FIXED désignant une exclusion mutuelle des flux montants et une valeur PROPORTIONAL désignant un cumul des flux montants. Le tableau de la figure 9 illustre l'application de ces règles de fusion dans un exemple particulier. Par mesure de simplicité, le descripteur de trafic U_TSPEC comporte ici un seul paramètre, exprimé dans une unité arbitraire, et qui est supposé additif. La ligne 40 représente le cas d'un descripteur de trafic commun associé aux noeuds-feuilles A et B et la ligne 41 le cas de descripteurs de trafic spécifiques. Des exemples de paramètres additifs sont les paramètres « token bucket rate » , « token bucket size » et « peak data rate » de la figure 6.

En pratique, tous les paramètres de trafic ne sont pas additifs. Plus généralement, si REVERSE_STYLE = FIXED, le contrôleur de gestion des ressources détermine les paramètres de trafic permettant d'offrir strictement la qualité de service requise à chaque flux montant sous l'hypothèse que deux noeuds-feuilles ne transmettent pas simultanément. Par abus de langage, le contrôleur de gestion des ressources détermine la « plus petite borne supérieure » de tous les descripteurs de trafic U_TSPEC, où « petit » et « supérieure » s'entendent en termes de qualité de service. Pour le paramètre « Maximum Packet Size », la borne supérieure est la valeur maximum. Pour le paramètre « Minimum Policed Unit », la borne supérieure est la valeur minimum.

Si REVERSE_STYLE = PROPORTIONAL, le contrôleur de gestion des ressources détermine les paramètres de trafic permettant d'offrir strictement la qualité de service requise à chaque flux montant sous l'hypothèse que tous les noeuds-feuilles transmettent simultanément.

En particulier, la combinaison d'un descripteur de trafic commun à tous les noeuds feuilles et d'un style de réservation FIXED revient à réserver la même bande passante sur toutes les connexions montantes de l'arbre.

Après cette détermination, le contrôleur de gestion des ressources du noeud D réserve des ressources de transfert dans la direction montante. Si les ressources nécessaires ne sont pas disponibles, un message d'erreur est émis.

Puis le contrôleur de signalisation du noeud D envoie des messages de demande de connexion 31 au noeud A et 32 au noeud B. Les descripteurs de trafic SENDER_TSPEC et U_TSPEC sont passés sans modification. Toutefois, les objets S2L sub-LSP descriptor ne sont passés qu'en direction des noeuds-feuilles qu'ils concernent. Dans chaque message PATH, l'objet UPSTREAM_LABEL est mis à jour par le noeud D pour spécifier l'étiquette à utiliser par le noeud suivant pour la connexion montante.

Le traitement décrit ci-dessus pour le noeud D peut être répété au niveau de plusieurs noeuds d'embranchement successifs le cas échéant. Finalement, chaque noeud-feuille reçoit un message PATH, éventuellement après des sauts intermédiaires non représentés ici.

A la réception du message 31, le contrôleur de gestion des ressources traite les descripteurs de trafic SENDER_TSPEC et U_TSPEC pour vérifier si les ressources du noeud A sont suffisantes pour établir la connexion montante et la connexion descendante avec les caractéristiques spécifiées par les descripteurs de trafic. Si les ressources nécessaires ne sont pas disponibles, un message d'erreur est émis. Sinon, le contrôleur de gestion des ressources réserve ces ressources pour les connexions 15 et 17. Le noeud-feuille A établit la connexion montante 4 vers le noeud D, à l'aide de l'étiquette qu'il reçoit dans l'objet UPSTREAM_LABEL et il transmet un message de réservation 33 au noeud D. Le noeud-feuille B exécute le même traitement et transmet un message de réservation 34 au noeud D. Les messages de réservation servent notamment à indiquer les labels à utiliser pour la connexion descendante. Sur la figure 4, on a indiqué des valeurs de labels transportés par les messages de signalisation et qui correspondent à l'exemple des figures 2 et 3. « UL » signifie UPSTREAM_LABEL.

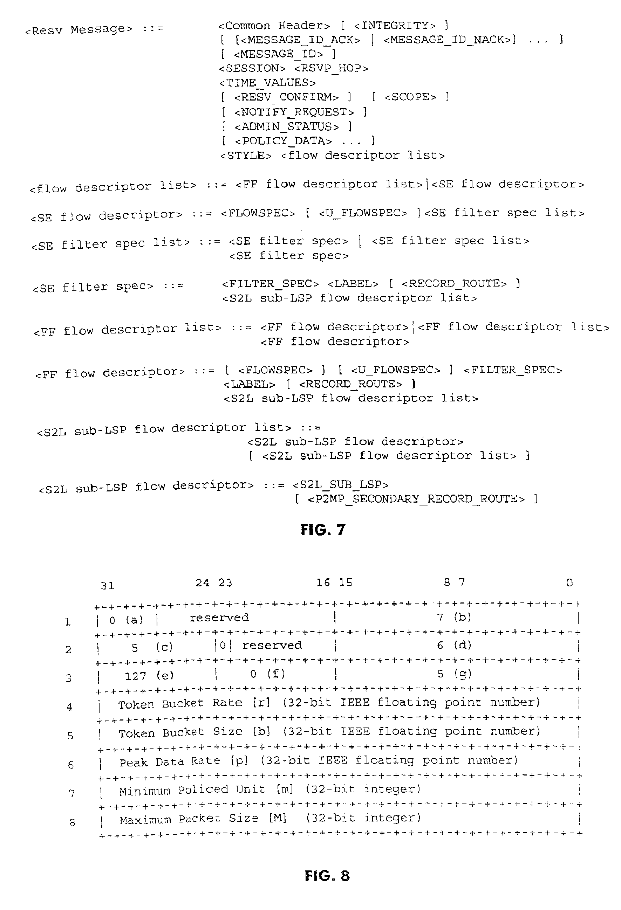

La figure 7 donne un exemple de format utilisable pour le message RESV. Hormis l'objet optionnel U_FLOWSPEC, ce format correspond à la RFC 4875. La figure 8 donne un exemple de format utilisable pour les objets FLOWSPEC et U_FLOWSPEC. Ce format correspond à un réseau de type paquet où la qualité de service est contrôlée dans le cadre défini par la RFC 2210.

L'objet FLOWSPEC est un descripteur de trafic pour le flux descendant et l'objet U_FLOWSPEC est un descripteur de trafic pour le flux montant. Ces descripteurs de trafic constituent une caractérisation des ressources que le noeud-feuille a attribuées à la connexion dans chaque sens. Ces descripteurs de trafic peuvent coïncider avec les valeurs de paramètres contenues dans les objets SENDER_TSPEC et U_TSPEC ou être différentes. En particulier, ils peuvent spécifier des paramètres de trafic de niveau inférieur à ceux initialement demandés par le noeud source, par exemple en termes de débit de données.

Si l'objet U_FLOWSPEC n'est pas utilisé, les messages RESV 33, 34, et 35 ne concernent que la connexion point-à-multipoint descendante et sont traités selon la technique connue. A chaque saut, le contrôleur de signalisation met à jour les tables de commutation en fonction des labels reçus. Le descripteur de trafic FLOWSPEC est passé au contrôleur de gestion des ressources du noeud qui termine la réservation des ressources pour la connexion descendante.

Dans le mode de réalisation décrit ci-dessus, les noeuds réservent les ressources pour les connexions montantes en traitant le message de demande de connexion. Dans une variante de réalisation, les noeuds pré-réservent les ressources pour les connexions montantes en traitant le message de demande de connexion et on se sert de l'objet U_FLOWSPEC dans les messages de réservation pour confirmer les réservations de ressources à effectuer. Dans ce cas, lorsque le noeud d'embranchement D a reçu les messages de réservation 33 et 34, les descripteurs de trafic U_FLOWSPEC provenant des noeuds-feuilles A et B sont passés au contrôleur de gestion des ressources. Le contrôleur de gestion des ressources applique à ces objets la règle de fusion des connexions montantes décrite précédemment pour déterminer les ressources à réserver pour la connexion montante. Puis le contrôleur de gestion des ressources termine la réservation des ressources. Un descripteur de trafic U_FLOWSPEC résultant de cette fusion est passé vers l'amont dans le message de réservation 35.

Dans les étapes de signalisation décrites ci-dessus en référence à la figure 4, il peut être nécessaire de répartir des informations de signalisation dans plusieurs messages pour respecter la taille maximale des messages. Chaque message de signalisation représenté peut donc correspondre en réalité à l'envoi de plusieurs messages complémentaires.

Selon la technique connue, le contrôleur de signalisation du noeud source S est aussi en charge d'envoyer aux noeuds-feuilles des messages de rafraîchissement périodiques pour maintenir la réservation des ressources.

Le caractère bidirectionnel de la demande d'établissement de connexion est signifié par la présence de l'objet UPSTREAM_LABEL dans le message PATH. Si l'objet UPSTREAM_LABEL est absent d'un message PATH, les noeuds peuvent traiter la demande de connexion comme une demande unidirectionnelle et ne pas tenir compte des éventuels objets U_TSPEC ou REVERSE_STYLE qui s'y trouveraient. Pour établir l'arbre de connexion de manière symétrique, il n'est pas nécessaire d'utiliser un descripteur de trafic séparé pour les connexions montantes. Selon un mode de réalisation, lorsque l'objet UPSTREAM_LABEL est présent mais pas l'objet U_TSPEC, les noeuds interprètent l'objet SENDER_TSPEC comme un descripteur de trafic concernant à la fois la connexion descendante et les connexions montantes.

Les objets contenus dans les messages de signalisation sont formés selon un ou plusieurs formats prédéfinis lisibles par les autres noeuds du domaine MPLS. Bien sûr, les formats et noms de variables utilisés dans la présente description sont purement illustratifs. Ces noms et formats pourraient faire l'objet de conventions différentes. De préférence, les noms et formats sont choisis de manière à présenter une compatibilité arrière avec les standards déjà établis.

Les échanges de données dans les réseaux sont fréquemment asymétriques. Les procédés décrits ci-dessus permettent de satisfaire des demandes asymétriques de bande passante. Ils sont applicables à tous les segments du réseau (accès, métropolitain et coeur) et permettent des optimisations particulièrement importantes dans des zones critiques proches des utilisateurs finaux, comme les segments d'accès, où le trafic est souvent fortement asymétrique. A titre d'exemple, les services de télévision diffusée et de vidéo à la demande VoD génèrent des flux fortement asymétriques sur ces segments. En effet, les flux descendants sont constitués des données vidéo envoyées vers les utilisateurs alors que les flux montants sont essentiellement constitués de messages de contrôle associés au service (demande de film, changement de chaîne, etc.) Les connexions montantes peuvent aussi être utilisées pour des fonctionnalités d'exploitation, gestion et maintenance du réseau (OAM).

Les procédés décrits ci-dessus reposent sur le protocole RSVP-TE. Toutefois, ils pourraient être mis en oeuvre avec d'autres protocoles de signalisation présentant des fonctionnalités équivalentes.

Certains des éléments décrits, notamment les contrôleurs de signalisation, de routage et de gestion des ressources, peuvent être réalisés sous différentes formes, de manière unitaire ou distribuée, au moyen de composants matériels et/ou logiciels. Des composants matériels utilisables sont les circuits intégrés spécifiques ASIC, les réseaux logiques programmables FPGA ou les microprocesseurs. Des composants logiciels peuvent être écrits dans différents langages de programmation, par exemple C, C++, Java ou VHDL. Cette liste n'est pas exhaustive. Plusieurs contrôleurs peuvent être représentés par un même élément matériel.

Un système de gestion de réseau peut être un équipement matériel, par exemple un micro-ordinateur, une station de travail, un appareil connecté à l'Internet ou tout autre dispositif de communication dédié ou à usage général. Des programmes logiciels exécutés par ce système remplissent des fonctions de gestion du réseau pour contrôler des éléments de réseau.

Les ressources de transfert englobent généralement tous les éléments physiques ou logiques mobilisables par le réseau pour transférer du trafic. Selon la nature des couches physiques et des couches de contrôle d'accès au support MAC dans les noeuds, les ressources de communication peuvent notamment désigner des éléments tels que du temps CPU, de l'espace mémoire, des registres, des ports logiques ou physiques, des canaux radio ou optiques, des intervalles de temps et autres.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » ou « une » pour un élément ou une étape n'exclut pas, sauf mention contraire, la présence d'une pluralité de tels éléments ou étapes.

Dans les revendications, tout chiffre de référence entre parenthèses ne saurait être interprété comme une limitation de la revendication.

## Revendications

1. Dispositif de communication (S) pour un réseau MPLS, comprenant :
un module de signalisation (61) pour établir des connexions MPLS dans ledit réseau et un module de gestion des ressources (63) pour allouer des ressources de transfert auxdites connexions, ledit module de signalisation étant apte à établir un arbre de connexion MPLS point-à-multipoint (15) avec une pluralité de noeuds-feuilles (A, B) dudit réseau en transmettant un message de demande de connexion (30) à destination desdits noeuds-feuilles et en recevant un message de réservation (35) en réponse audit message de demande de connexion, ledit message de demande de connexion comprenant des adresses desdits noeuds-feuilles et des caractéristiques de trafic descendant pour caractériser la qualité de service désirée pour un flux de données descendant à transmettre auxdits noeuds-feuilles, ledit message de réservation comprenant une étiquette pour établir une connexion MPLS descendante, **caractérisé par le fait que**, pour établir ledit arbre de connexion MPLS (15, 16, 17) de manière bidirectionnelle, ledit message de demande de connexion comprend en outre des caractéristiques de trafic montant (U_TSPEC) pour caractériser la qualité de service désirée pour des flux de données montants à recevoir depuis lesdits noeuds-feuilles et une étiquette pour établir une connexion MPLS montante.

2. Dispositif de communication selon la revendication 1, **caractérisé par le fait que** les caractéristiques de trafic montant comprennent au moins une caractéristique de trafic commune associée à tous les noeuds-feuilles désignés dans le message de demande de connexion.

3. Dispositif de communication selon la revendication 1, **caractérisé par le fait que** les caractéristiques de trafic montant comprennent plusieurs caractéristiques de trafic distinctes associées respectivement à plusieurs noeuds-feuilles distincts désignés dans le message de demande de connexion.

4. Dispositif de communication selon la revendication 1, **caractérisé par le fait que** ledit module de gestion des ressources est apte à appliquer une règle de fusion des connexions montantes pour déterminer une quantité de ressources de transfert allouée à la connexion MPLS montante en fonction des caractéristiques de trafic montant associées auxdits noeuds-feuilles.

5. Dispositif de communication selon la revendication 4, **caractérisé par le fait que** le module de signalisation est apte à insérer dans ledit message de demande de connexion un indicateur de style de réservation indiquant la règle de fusion appliquée par ledit module de gestion des ressources.

6. Dispositif de communication selon la revendication 4, **caractérisé par le fait que** ledit module de gestion des ressources est apte à appliquer sélectivement plusieurs règles de fusion des flux montants.

7. Dispositif de communication selon la revendication 4, **caractérisé par le fait que** ladite règle de fusion des connexions montantes est une règle d'exclusion mutuelle des flux montants.

8. Dispositif de communication selon la revendication 4, **caractérisé par le fait que** ladite règle de fusion des connexions montantes est une règle de cumul des flux montants.

9. Procédé pour établir un arbre de connexion point-à-multipoint bidirectionnel (15, 16, 17) entre un noeud source (S) et des noeuds-feuilles (A, B) dans un réseau MPLS, ledit procédé comprenant les étapes consistant à :
recevoir au niveau d'un noeud de commutation (D) un message de demande de connexion (30) comportant des adresses de destination identifiant des noeuds-feuilles, des caractéristiques de trafic descendant pour caractériser la qualité de service désirée pour un flux de données descendant à transmettre auxdits noeuds-feuilles, des caractéristiques de trafic montant pour caractériser la qualité de service désirée pour des flux de données montants à recevoir depuis lesdits noeuds-feuilles et
une étiquette pour établir une connexion MPLS montante (5) vers le noeud source, déterminer une quantité de ressources de transfert allouée à ladite connexion MPLS montante en fonction desdites caractéristiques de trafic montant et d'une règle de fusion des connexions montantes,
déterminer des interfaces aval dudit noeud de commutation pour communiquer avec lesdits noeuds-feuilles,
sur chacune desdites interface aval, transmettre un message de demande de connexion (31, 32) comportant au moins une adresse de destination identifiant au moins un noeud-feuille accessible à travers ladite interface aval, lesdites caractéristiques de trafic descendant, les caractéristiques de trafic montant pour caractériser la qualité de service désirée pour les flux de données montants à recevoir depuis ledit au moins un noeud-feuille et une étiquette pour établir une connexion MPLS montante vers ledit noeud de commutation,
sur lesdites interfaces aval, recevoir des messages de réservation (33, 34) comportant des étiquettes pour établir des connexions MPLS descendantes (2, 3) vers lesdits noeuds-feuilles,
transmettre vers ledit noeud source un message de réservation (35) comportant une étiquette pour établir une connexion MPLS descendante vers ledit noeud de commutation,
créer une association entre les étiquettes des connexions MPLS descendantes et une association entre les étiquettes des connexions MPLS montantes dans une table de commutation (19) dudit noeud de commutation.

10. Procédé selon la revendication 9, **caractérisé par le fait que** les caractéristiques de trafic montant comprennent au moins une caractéristique de trafic commune associée à tous les noeuds-feuilles désignés dans le message de demande de connexion.

11. Procédé selon la revendication 9, **caractérisé par le fait que** les caractéristiques de trafic montant comprennent plusieurs caractéristiques de trafic distinctes associées respectivement à plusieurs noeuds-feuilles distincts désignés dans le message de demande de connexion.

12. Procédé selon la revendication 9, **caractérisé par** les étapes consistant à sélectionner ladite règle de fusion des connexions montantes en fonction d'un indicateur de style de réservation contenu dans ledit message de demande de connexion reçu (30) et à retransmettre ledit indicateur de style de réservation dans les messages de demande de connexion (31, 32) sur lesdites interfaces aval.

13. Procédé selon la revendication 12, **caractérisé par le fait que** ladite règle de fusion des connexions montantes est sélectionnée dans un ensemble comprenant une règle d'exclusion mutuelle des flux montants et une règle de cumul des flux montants.

14. Procédé selon la revendication 9, dans lequel les messages de réservation reçus par le noeud de commutation comportent des caractéristiques de trafic montant pour caractériser la qualité de service désirée pour les flux de données montants à recevoir depuis lesdits noeuds-feuilles et le message de réservation transmis par le noeud de commutation comporte des caractéristiques de trafic montant résultant de l'application de ladite règle de fusion.

15. Noeud de commutation (D) pour un réseau MPLS, comprenant un module de signalisation pour établir des connexions MPLS dans ledit réseau et un module de gestion des ressources pour allouer des ressources de transfert auxdites connexions,
ledit module de signalisation étant apte à établir un arbre de connexion MPLS point-à-multipoint (15) avec une pluralité de noeuds-feuilles (A, B) en effectuant les étapes consistant à :
recevoir depuis un noeud amont (S) un message de demande de connexion (30) comportant des adresses de destination identifiant des noeuds-feuilles et des caractéristiques de trafic descendant pour caractériser la qualité de service désirée pour un flux de données descendant à transmettre auxdits noeuds-feuilles,
transmettre à destination desdits noeuds-feuilles des messages de demande de connexion (31, 32) comportant lesdites adresses de destination et lesdites caractéristiques de trafic descendant,
en réponse auxdits messages de demande de connexion, recevoir des messages de réservation (33, 34) comportant des étiquettes pour établir des connexions MPLS descendantes (2, 3) vers lesdits noeuds-feuilles,
transmettre vers ledit noeud amont un message de réservation (35) comportant une étiquette pour établir une connexion MPLS descendante vers ledit noeud de commutation,
et créer une association entre les étiquettes des connexions MPLS descendantes dans une table de commutation (19) dudit noeud de commutation,
**caractérisé par le fait que**, pour établir ledit arbre de connexion MPLS (15, 16, 17) de manière bidirectionnelle, ledit module de signalisation est apte à établir une connexion MPLS montante (5) avec ledit noeud amont à l'aide d'une étiquette reçue dans ledit message de demande de connexion,
et que ledit module de gestion des ressources est apte à déterminer une quantité de ressources de transfert allouée à ladite connexion MPLS montante en fonction d'une règle de fusion des connexions montantes et de caractéristiques de trafic montant reçues dans ledit message de demande de connexion,
ledit module de signalisation étant apte à transmettre dans lesdits messages de demande de connexion (31, 32) lesdites caractéristiques de trafic montant et des étiquettes pour établir des connexions MPLS montantes (4, 6) vers ledit noeud de commutation, et à créer une association entre les étiquettes des connexions MPLS montantes dans ladite table de commutation (19).

16. Noeud de commutation selon la revendication 15, **caractérisé par le fait que** ledit module de gestion des ressources est apte à sélectionner ladite règle de fusion des connexions montantes en fonction d'un indicateur de style de réservation contenu dans ledit message de demande de connexion reçu et que ledit module de signalisation est apte à transmettre ledit indicateur de style de réservation dans lesdits messages de demande de connexion (31, 32).

17. Noeud de commutation selon la revendication 16, **caractérisé par le fait que** ladite règle de fusion des connexions montantes est sélectionnée dans un ensemble comprenant une règle d'exclusion mutuelle des flux montants et une règle de cumul des flux montants.

18. Noeud de commutation selon la revendication 15, **caractérisé par le fait que** ledit module de gestion des ressources est apte à allouer à une connexion MPLS montante (4, 6) provenant d'au moins un noeud-feuille (A, B) une quantité de ressources de transfert correspondant aux caractéristiques de trafic montant associées audit au moins un noeud-feuille dans ledit message de demande de connexion (30) reçu par le noeud de commutation.

19. Noeud de commutation selon la revendication 15, **caractérisé par le fait que** le module de signalisation est apte à transmettre au noeud amont un message de réservation (35) comportant des caractéristiques de trafic montant résultant de l'application de ladite règle de fusion.
